# EUROPÄISCHE PATENTSCHRIFT

(11) **EP 2 454 453 B1**
(45) Veröffentlichungstag und Bekanntmachung des Hinweises auf die Patenterteilung: **19.08.2015**
(21) Anmeldenummer: 10725695.0
(22) Anmeldetag: 17.06.2010
(51) Int. Cl.: F01K 7/34, F01K 17/02, F01K 17/04

(54) **Dampfkraftwerksanlage mit Dampfturbineneinheit und Prozessdampfverbraucher und Verfahren zum betreiben einer Dampfkraftwerksanlage mit Dampfturbineneinheit und Prozessdampfverbraucher**
Steam plant assembly with steam turbine unit, process steam consumer and method for operating same with steam turbine unit and process steam consumer
Installation de centrale à vapeur dotée d'une unité de turbine à vapeur et récepteur de vapeur de traitement ainsi que procédé de fonctionnement d'une installation de centrale à vapeur dotée d'une unité de turbine à vapeur et récepteur de vapeur de traitement

(30) Priorität: 15.07.2009 EP 09165561
(43) Veröffentlichungstag der Anmeldung: 23.05.2012
(73) Patentinhaber: Siemens Aktiengesellschaft, 80333 München (DE)
(72) Erfinder: FRÜH, Tilman, 91085 Weisendorf (DE); GRAEBER, Carsten, 91056 Erlangen (DE); ROST, Mike, 91058 Erlangen (DE)
(86) Internationale Anmeldenummer: PCT/EP2010/058517
(87) Internationale Veröffentlichungsnummer: WO 2011/006728

(56) Entgegenhaltungen:
- CH-A- 399 493
- GB-A- 2 069 615
- US-A- 4 352 270

## Beschreibung

Die Erfindung betrifft eine Dampfkraftwerksanlage mit Dampfturbineneinheit und Prozessdampfverbraucher, insbesondere einer Abscheidevorrichtung für Kohlendioxid als Prozessdampfverbraucher. Die Erfindung betrifft außerdem ein Verfahren zum Betreiben einer Dampfkraftwerksanlage mit einer Dampfturbineneinheit und einem Prozessdampfverbraucher.

Dampfkraftwerksanlagen (DKW) zur Erzeugung elektrischer Energie bestehen im Wesentlichen aus einer Dampfturbineneinheit und einem befeuerten Kessel, oder in Ausgestaltung als Gas- und Dampfturbinenkraftwerksanlage (GuD), aus Gasturbineneinheit mit nachgeschaltetem Abhitzedampferzeuger und Dampfturbineneinheit. Üblicherweise werden derartigen Kraftwerksanlagen Dampf oder Energie für sekundäre Prozesse, die nicht direkt mit der Stromerzeugung in Verbindung stehen, an entsprechenden Stellen entnommen. So wird z.B. für eine der Kraftwerksanlage nachgeschaltete Rauchgasreinigungsanlage, z.B. eine Kohlendioxidabscheidevorrichtung, mit Prozessdampf betrieben, welcher der Dampfturbineneinheit an einer Zwischenstufe der Dampfturbineneinheit entnommen wird.

Ein weiteres Beispiel für Prozessdampfauskopplung aus der Dampfturbineneinheit ist die Fernwärmeversorgung. Die Menge an entnommenem Dampf ist dabei abhängig von der Betriebsweise des Prozessdampfverbrauchers oder der Abscheidevorrichtung für Kohldioxid. Die entnommene Dampfmenge führt dabei zu einer Reduzierung des Dampfmassenstroms, welcher der nach der Entnahme nachfolgenden Turbinenstufen der Dampfturbineneinheit fehlt. In der Regel fordern Prozessdampfverbraucher, wie z.B. eine Kohlendioxidabscheidevorrichtung, Prozessdampf auf einem entsprechenden Druck- und Temperaturniveau.

Die GB 2 069 615 A offenbart dazu ein Verfahren zur Anwendung in einem Dampfkraftwerk, das es ermöglicht, eine Teildampfmenge eines auf einem relativ hohen Druckniveau verfügbaren Dampfes, für die Verwendung in einem Prozess, der ein relativ niedriges Druckniveau fordert, bereit zu stellen. Dazu wird die Hochdruckstufe einer Dampfturbine entnommen, und über einen Rekuperator geführt. In dem Rekuperator wird der Dampf mit einem entspannten Dampf im Wärmetausch geführt, der aus einer weiteren Dampfturbine stammt, wobei der entspannte Dampf erwärmt wird. Der erwärmte Dampf wird anschließend über einen Wärmetauscher als Prozessdampf einem Verbraucher zugeführt. Anschließend wird das den Verbraucher verlassende Kondensat in dem Wärmetauscher mit dem erwärmten Dampf im Wärmetausch geführt. Dadurch ist eine Kühlung des erwärmten Dampfes durch das Kondensat aus dem Verbraucher erzielbar.

Für derzeitige Konzepte von Abscheidevorrichtungen für Kohlendioxid wird eine große Menge an thermischer Energie benötigt, für die Prozessdampf aus dem Wasser-Dampf-Kreislauf der Kraftwerksanlage entnommen werden muss. Die thermische Energie wird durch Kondensation des Prozessdampfes in die Desorptionseinheit der Abscheidevorrichtung für Kohlendioxid eingebracht. Daraus resultiert für den Prozessdampf ein Mindestdruck, der zwischen 2 und 4 bar liegt. Auf diesem Druckniveau ist der Dampf bei modernen Kraftwerksanlagen mit Zwischenüberhitzung und hohen Dampftemperaturen jedoch noch stark überhitzt. Die Energie eines solchen stark überhitzten Dampfes lässt sich bei der normalen Wärmeabgabe in Wärmetauschern nur unzureichend nutzen.

Deshalb wird bei bekannten Kraftwerksanlagen der entnommene Prozessdampf durch die Einspritzung von Wasser im Temperaturniveau reduziert, und dadurch leicht überhitzt. Bei dem eingespritzten Wasser handelt es sich in der Regel um Kondensat aus dem Wasser-Dampf-Kreislauf der Kraftwerksanlage. Für den Desorptionsprozess ergeben sich dadurch keine Vorteile. Nachteilig an diesem bekannten Verfahren ist insbesondere, dass die Energie die in der Überhitzung des Dampfes liegt nicht optimal genutzt wird. Außerdem ist die Auskopplung von Kondensat aus dem Wasser-Dampf-Kreislauf der Kraftwerksanlage zur Einspritzung in den stark überhitzten Dampf als Kühlmedium aufwändig.

Genereller Nachteil an Dampfkraftwerksanlagen mit Prozessdampfverbrauchern, die aus dem Stand der Technik bekannt sind, sind Stromverluste, die dadurch entstehen, dass hochwertiger Prozessdampf, z.B. stark überhitzter Dampf, der Dampfturbineneinheit entnommen wird, obwohl für die Prozessdampfverbraucher ein leicht überhitzter Dampf ausreichend ist.

Eine Aufgabe der Erfindung ist es daher, eine Dampfkraftwerksanlage mit Dampfturbineneinheit und Prozessdampfverbraucher vorzuschlagen, bei der der Dampfturbineneinheit entnommene Dampf energetisch vorteilhaft und weitgehend umfassend nutzbar ist. Eine weitere Aufgabe der Erfindung ist es, ein Verfahren zum Betreiben einer Dampfkraftwerksanlage mit Dampfturbineneinheit und Prozessdampfverbraucher vorzuschlagen, bei dem der dem Dampfkraftwerksprozess entnommene Prozessdampf energetisch vorteilhaft für den Prozessdampfverbraucher konditioniert wird.

Die auf eine Dampfkraftwerksanlage gerichtete Aufgabe der Erfindung wird gelöst durch die Merkmale des Anspruchs 1.

Der Erfindung liegt dabei die Idee zugrunde, eine Konditionierung eines der Dampfturbineneinheit entnommenen Prozessdampfes für den Prozessdampfverbraucher durch einen Enthitzer zu erzielen. Durch den Enthitzer ist es möglich, den Prozessdampf auf ein für den Prozessdampfverbraucher optimiertes Temperaturniveau zu bringen. Dabei ermöglicht der Enthitzer eine Weiterverwendung der dem Prozessdampf entnommenen Energie. Derartige Enthitzer können als Wärmetauscher ausgestaltet sein, dabei nimmt der Enthitzer primärseitig Energie auf und gibt sie an ein Medium sekundärseitig ab. Durch den Einsatz eines Enthitzers kann zudem auf andere Maßnahmen zur Anpassung des Temperaturniveaus, wie z.B. eine Einspritzung von Wasser oder Kondensat, theoretisch verzichtet werden. Die Erfindung ermöglicht somit eine Nutzung der durch den Enthitzer entnommenen Energie bei gleichzeitiger Konditionierung des Prozessdampfes für den nachgeschalteten Prozessdampfverbraucher, wodurch der Gesamtwirkungsgrad der Dampfkraftwerksanlage erheblich gesteigert wird. Die Erfindung lässt sich gegenüber den bekannten Verschaltungen überdies auch mit kürzeren Rohrleitungswegen realisieren, wodurch Kosten für die Dampfkraftwerksanlage reduziert werden.

Die Dampfkraftwerksanlage umfasst dabei einen Wasser-Dampf-Kreislauf mit einer Hauptkondensatleitung und einer Rücklaufkondensatleitung, wobei der Enthitzer sekundärseitig in die Rücklaufkondensatleitung geschaltet ist. Diese Art der Verschaltung ermöglicht vorteilhaft die Nutzung der durch den Enthitzer vom Prozessdampf abgeführten Energie zur Vorwärmung eines Kondensats in dem Wasser-Dampf-Kreislauf der Dampfkraftwerksanlage. Durch den Beitrag des Enthitzers zur Vorwärmung des Kondensats wird ein dem Enthitzer sekundärseitig nachgeschalteter Vorwärmer zur Kondensatvorwärmung entlastet. Dadurch kann der für diesen Vorwärmer notwendige Anzapfdampf aus der Dampfturbineneinheit reduziert werden, wodurch sich der Anteil des Arbeitsdampfes in der Dampfturbineneinheit erhöht. Jedoch wird durch die Abkühlung des Prozessdampfes in dem Enthitzer eine größere Menge an Dampf für die Zuführung in den Enthitzer notwendig, um dem Prozessdampfverbraucher die gleiche Wärmemenge in Form von Prozessdampf zur Verfügung stellen zu können. Somit findet durch den Einsatz des Enthitzers insbesondere eine Verschiebung der Dampfmengen statt, da jedoch der vom Druck höher gelegene, und somit höherwertigere Anzapfdampf reduziert wird, ergibt sich daraus eine Wirkungsgradverbesserung der Dampfkraftwerksanlage. Durch den Einsatz des Kondensats als Kühlmedium für den Enthitzer kann ferner eine aufwändige Auskopplung von Hauptkondensat im Wasser-Dampf-Kreislauf als Kühlmedium vermieden werden. Dadurch wird die Anzahl der Schnittstellen reduziert und die prozesstechnische Einbindung vereinfacht.

Der Prozessdampfverbraucher ist eine Abscheidevorrichtung für Kohlendioxid aus einem Rauchgas. Derartige Kohlendioxidabscheidevorrichtungen benötigen eine große Menge an thermischer Energie, die zwangsläufig in Form von Prozessdampf aus dem Wasser-Dampf-Kreislauf der Dampfturbinenkraftwerksanlage entnommen wird. Der entnommene Prozessdampf wird dabei insbesondere für die Desorption bzw. Regenerierung eines Lösungsmittels benötigt. Eine Prozessanforderung der Rauchgaswäsche ist ein Mindesttemperaturniveau, wodurch bei einer Wärmeabgabe durch Kondensation nach derzeitigem Kenntnisstand ein Mindestdruck des Prozessdampfes zwischen 2 und 4 bar resultiert. Auf diesem Druckniveau ist der Dampf bei einem normalen Kraftwerksprozess mit Zwischenüberhitzung und hohen Dampftemperaturen noch stark überhitzt. Die Energie des überhitzten Dampfes lässt sich in einem Desorptionsprozess ohne vorgelagerte Enthitzung nur unzureichend nutzen, da für den Wärmetransport nur das Sattdampfniveau des Prozessdampfes relevant ist.

Erfindungsgemäß ist dabei dieAnzapfleitung an der Überströmleitung der Dampfturbineneinheit angeschlossen. Die Überströmleitung verbindet die Mitteldruckturbine mit der Niederdruckturbine. Eine Entnahme des Prozessdampfes an der Überströmleitung ist konstruktiv einfacher zu realisieren, als die Entnahme von Prozessdampf zwischen den Stufen der Dampfturbinen.

Durch die Erfindung ist es möglich, den für einen Prozessdampfverbraucher erforderlichen Dampf aus einer günstigen Stelle der Dampfturbineneinheit zu entnehmen, und energetisch vorteilhaft einem Prozessdampfverbraucher zuzuführen. Ein anfallender Überhitzungsanteil des Prozessdampfes kann durch den erfindungsgemäßen Enthitzer an anderer Stelle der Dampfkraftwerksanlage vorteilhaft genutzt werden.

Die auf ein Verfahren gerichtete Aufgabe der Erfindung wird gelöst durch die Merkmale des Anspruchs 2.

Die Erfindung geht dabei von der Überlegung aus, dem Prozessdampfverbraucher einen konditionierten Dampf in Form eines leicht überhitzten Dampfes zur Verfügung zu stellen, der zuvor in einer ersten Prozessstufe der Dampfturbineneinheit in Form von überhitztem Dampf entnommen wurde und in einer zweiten Prozessstufe enthitzt wurde.

Die Dampfkraftwerksanlage umfasst weiterhin einen Wasser-Dampf-Kreislauf, wobei die dem überhitzten Dampf entzogene Wärme dem Kondensat des Wasser-Dampf-Kreislaufes der Dampfkraftwerksanlage zugeführt wird. Dadurch wird die vom Enthitzer abgeführte Energie zur Vorwärmung eines Kondensats in dem Wasser-Dampf-Kreislauf der Dampfkraftwerksanlage nutzbar. Durch den Beitrag des Enthitzers zur Vorwärmung des Kondensats wird ein dem Enthitzer sekundärseitig nachgeschalteter Vorwärmer zur Kondensatvorwärmung entlastet. Der notwendige Anzapfdampf aus der Dampfturbineneinheit kann für diesen Vorwärmer reduziert werden, wodurch sich der Anteil des Arbeitsdampfes in der Dampfturbineneinheit erhöht.

Der leicht überhitzte oder konditionierte Dampf wird im Prozessdampfverbraucher für die Abscheidung von Kohlendioxid verwendet. Der konditionierte Dampf wird dabei insbesondere für die Desorption bzw. Regenerierung eines Lösungsmittels verwendet.
Vorteilhafterweise wird der überhitzte Dampf der Dampfturbineneinheit aus der Überströmleitung zwischen der Mitteldruckstufe und der Niederdruckstufe entnommen. Eine Entnahme des Prozessdampfes an der Überströmleitung ist konstruktiv einfacher zu realisieren, als die Entnahme von Prozessdampf zischen den Stufen der Dampfturbinen.

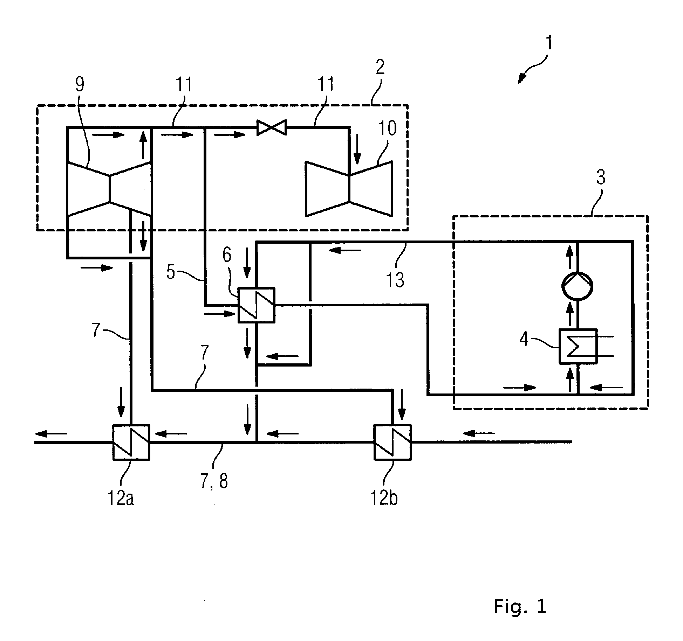

Folgend werden die Ausführungsbeispiele der Erfindung anhand einer beigefügten schematischen Zeichnung näher erläutert. Die in FIG 1 dargestellte Dampfkraftwerksanlage 1 zeigt im Wesentlichen eine Dampfturbineneinheit 2 und einen Prozessdampfverbraucher 3 sowie einen Enthitzer 6.

Die Dampfturbineneinheit 2 zeigt eine Mitteldruckturbine 9 und eine Niederdruckturbine 10, die über eine Überströmleitung 11 miteinander verbunden sind. Im Betrieb der Dampfkraftwerksanlage 1 kann somit ein die Mitteldruckturbine 9 verlassender überhitzter Dampf in die Niederdruckturbine 10 überführt werden. An die Überströmleitung 11 ist die Anzapfleitung 5 angeschlossen. Durch die Anzapfleitung 5 kann ein Teil des überhitzten Dampfes aus der Überströmleitung 11 abgezweigt werden.

Die Anzapfleitung 5 ist weiterhin primär zuleitend mit dem Enthitzer 6 verbunden. Primär ableitend ist der Enthitzer 6 mit dem Prozessdampfverbraucher 3 verbunden. Durch den Enthitzer 6 wird einem in der Anzapfleitung 5 geführten überhitzten Dampf Wärme entzogen. Den Enthitzer verlässt primär ableitend ein leicht überhitzter Dampf.

Der Prozessdampfverbraucher 3 ist hier lediglich schematisch dargestellt. Wesentliche Schnittstelle des Prozessdampfverbrauchers 3 mit der Dampfturbineneinheit ist insbesondere ein den Prozessdampfverbraucher 3 umfassender Wärmetauscher 4. Der durch Wärmeentzug im Enthitzer 6 gebildete gesättigte Dampf wird dem Wärmetauscher 4 des Prozessdampfverbrauchers 3 zugeführt. Dabei wird Wärme von dem gesättigten Dampf an den Prozessdampfverbraucher abgegeben, wobei der gesättigte Dampf kondensiert.

Das Rücklaufkondensat aus dem Prozessdampfverbraucher 3 wird nun sekundär zuleitend über die Rücklaufkondensatleitung 13 dem Enthitzer 6 zugeführt. Dabei wird das Kondensat erwärmt und sekundär aus dem Enthitzer 6 abgeleitet. Die Ableitung erfolgt dabei in die Hauptkondensatleitung 8 des Wasser-Dampf-Kreislaufs 7 der Dampfkraftwerksanlage 1. Das Kondensat ist für eine erneute Verdampfung und Einleitung in die Dampfturbineneinheit 2 vorgesehen.

Durch die Erwärmung des Kondensats aus dem Prozessdampfverbraucher 3 im Enthitzer 6 wird der Vorwärmer 12a entlastet. Durch die Entlastung des Vorwärmers 12a muss der Dampfturbineneinheit 2 weniger Dampf für die Vorwärmung des Kondensats entnommen werden. Dadurch erhöht sich der Anteil des Arbeitsdampfes in der Dampfturbineneinheit 2, woraus sich eine Wirkungsgradverbesserung der Dampfkraftwerksanlage 1 ergibt.

## Patentansprüche

1. Dampfkraftwerksanlage (1) umfassend eine Dampfturbineneinheit (2), Wasser- Dampfkreislauf (7) und einem Prozessdampfverbraucher (3),
• wobei die Dampfturbineneinheit (2) aus mindestens einer Mitteldruckturbine (9) und mindestens einer Niederdruckturbine (10) besteht, wobei die Mitteldruckturbine (9) mit der Niederdruckturbine (10) über eine oder mehrere Überströmleitungen (11) miteinander verbunden ist, und
• wobei der Wasser- Dampfkreislauf (7) eine Hauptkondensatleitung (8) und eine Rücklaufkondensatleitung (13) umfasst, und
• wobei der Prozessdampfverbraucher (3) eine Abscheidevorrichtung für Kohlendioxid aus einem Rauchgas ist, und einen Wärmetauscher (4) umfasst, und die Dampfturbineneinheit (2) über eine Anzapfleitung (5) mit dem Wärmetauscher (4) verbunden ist,
wobei die Anzapfleitung (5) von der Überströmleitung (11) abzweigt, wobei in die Anzapfleitung (5) primärseitig ein Enthitzer (6) geschaltet ist, und wobei der Enthitzer (6) sekundärseitig in die Rücklaufkondensatleitung (13) geschaltet ist.

2. Verfahren zum Betreiben einer Dampfkraftwerksanlage mit wenigstens einer Dampfturbineneinheit und einem Kohlendioxid-Abscheideprozess,
- wobei der Dampfturbineneinheit an einer ersten Prozessstufe aus einer Überströmung zwischen einer Mitteldruckstufe und einer Niederdruckstufe ein überhitzter Dampf entnommen, und an einer zweiten Prozessstufe der überhitzte Dampf enthitzt wird, wobei dem überhitzten Dampf Wärme entzogen wird und ein leicht überhitzter Dampf gebildet wird, und
- wobei der konditionierte Dampf dem Kohlendioxid-Abscheideprozess zugeführt wird
- wobei die Dampfkraftwerksanlage einen Wasser- Dampfkreislauf umfasst und die dem überhitzten Dampf entzogene Wärme dem Kondensat des Wasser- Dampfkreislaufes der Dampfkraftwerksanlage zugeführt wird.

## Claims

1. Steam power plant (1) comprising a steam turbine unit (2), a water-steam cycle (7) and a process steam consumer (3),
• wherein the steam turbine unit (2) consists of at least one intermediate-pressure turbine (9) and at least one low-pressure turbine (10), wherein the intermediate-pressure turbine (9) is connected to the low-pressure turbine (10) via one or more crossover lines (11), and
• wherein the water-steam cycle (7) comprises a main condensate line (8) and a return condensate line (13), and
• wherein the process steam consumer (3) is a separator for carbon dioxide from a flue gas, and comprises a heat exchanger (4), and the steam turbine unit (2) is connected via a bleed line (5) to the heat exchanger (4),
wherein the bleed line (5) branches off from the crossover line (11), wherein a desuperheater (6) is connected into the bleed line (5) on the primary side, and wherein the desuperheater (6) is connected into the return condensate line (13) on the secondary side.

2. Method for operating a steam power plant with at least one steam turbine unit and a carbon dioxide separating process,
- wherein superheated steam is extracted from the steam turbine unit from a crossover between an intermediate-pressure stage and a low-pressure stage at a first process stage, and at a second process stage the superheated steam is desuperheated, wherein heat is extracted from the superheated steam and slightly superheated steam is formed, and
- wherein the conditioned steam is fed to the carbon dioxide separating process,
- wherein the steam power plant comprises a water-steam cycle and the heat which is extracted from the superheated steam is fed to the condensate of the water-steam cycle of the steam power plant.

## Revendications

1. Installation ( 1 ) de centrale à vapeur comprenant un groupe ( 2 ) de turbine à vapeur, un circuit ( 7 ) d'eau-vapeur et un utilisateur ( 3 ) de vapeur de processus,
• dans laquelle le groupe ( 2 ) de turbine à vapeur est constitué d'au moins une turbine ( 9 ) moyenne pression et d'au moins une turbine ( 10 ) basse pression, la turbine ( 9 ) moyenne pression étant reliée à la turbine ( 10 ) basse pression par un ou par plusieurs conduits ( 11 ) de trop plein, et
• dans laquelle le circuit ( 7 ) d'eau-vapeur comprend un conduit principal pour du produit condensé et un conduit ( 13 ) de recyclage de produit condensé, et
• dans laquelle l'utilisateur ( 3 ) de vapeur de processus est un dispositif pour séparer du dioxyde de carbone d'un gaz de fumée et comprend un échangeur de chaleur ( 4 ) et le groupe (2) de turbine à vapeur est relié à l'échangeur de chaleur ( 4 ) par un conduit ( 5 ) de prélèvement,
• dans laquelle le conduit ( 5 ) de prélèvement bifurque du conduit ( 11 ) de trop plein, dans laquelle un désurchauffeur ( 6 ) est monté du côté primaire dans le conduit ( 5 ) de prélèvement et dans laquelle le désurchauffeur ( 6 ) est monté du côté secondaire dans le conduit ( 13 ) de recyclage de produit condensé.

2. Procédé pour faire fonctionner une installation de centrale à vapeur, comprenant au moins un groupe de turbine à vapeur et un processus de séparation du dioxyde de carbone,
- dans lequel une vapeur surchauffée est prélevée du groupe de turbine à vapeur en un premier stade de processus d'un trop plein entre un étage de moyenne pression et un étage de basse pression et la vapeur surchauffée est désurchauffée en un deuxième stade processus, de la chaleur étant retirée de la vapeur surchauffée et une vapeur légèrement surchauffée étant formée et
- dans lequel la vapeur conditionnée est envoyée au processus de séparation du dioxyde de carbone et
- dans lequel l'installation de centrale à vapeur comprend un circuit d'eau-vapeur et la chaleur retirée de la vapeur surchauffée est envoyée au produit condensé du circuit d'eau-vapeur de l'installation de centrale à vapeur.
